# EUROPEAN PATENT SPECIFICATION

(11) **EP 0 568 519 B1**
(45) Date of publication and mention of the grant of the patent: **09.10.1996**
(21) Application number: 93870073.9
(22) Date of filing: 28.04.1993
(51) Int. Cl.: C08K 3/34, B27N 3/02

(54) **Method for the manufacturing of a construction element**
Verfahren zur Herstellung eines Bauelementes
Procédé de fabrication d'un élément de construction

(30) Priority: 28.04.1992 BE 9200380
(43) Date of publication of application: 03.11.1993
(73) Proprietor: IOOV, Naamloze Vennootschap, 9100 Sint-Niklaas (BE)
(72) Inventor: Fleury, Albert G., B-9120 Haasdonk (BE)
(74) Representative: Debrabandere, René

(56) References cited:
- EP-A- 0 341 876
- DE-A- 2 101 253
- FR-A- 1 266 233
- GB-A- 1 036 306
- GB-A- 1 447 591
- US-A- 3 455 850
- CHEMICAL ABSTRACTS, vol. 85, no. 2, 12 July 1976, Columbus, Ohio, US; abstract no. 6754a, ISHIKAWA TAKASHI 'FIREPROOFED POLYURETHANE FOAMS' page 56 ;
- CHEMICAL ABSTRACTS, vol. 85, no. 2, 12 July 1976, Columbus, Ohio, US; abstract no. 6754a, ISHIKAWA TAKASHI 'FIREPROOFED POLYURETHANE FOAMS' page 56 & JP-A-7 622 737

## Description

The invention concerns a method for the manufacturing of a construction element, according to which wood particles or woody particles are mixed with a hardenable adhesive and the mixture is pressed in the required shape and is stiffened as a result of the hardening of the adhesive.

Such construction elements are usually relatively easy to manufacture and relatively inexpensive. They are usually disadvantageous in that they have a small fire resistance, for example a fire resistance of only a few minutes, which limits their application possibilities in building constructions.

The invention aims to remedy this disadvantage and to provide a construction element of the above-mentioned type which has a relatively good fire resistance.

To this aim, before the mixture is pressed in the required shape and stiffened, an amount of a material is added to it which is non-inflammable and which does not undergo any structural changes up to a temperature of at least 600 degrees Celsius and which has a bad heat conductivity, and an amount of a swelling product is added which starts swelling at a temperature higher than 80 degrees Celsius.

The noninflammable material reduces the progress of the destruction of the wood or woody particles as a result of the action of flames, whereas the depth which may possibly be formed in the construction element as it is burnt away is immediately filled by the swelling product as this swells, as a result of which the progress of the fire through the wood or woody particles is very much slowed down.

US-A-3.455.850 discloses a method for manufacturing construction panels from polyurethane foam which are rendered fire-resistant by a combination of a intumescent material and a non-inflammable filler having a low conductivity.

According to "Chemical Abstracts Vol. 85, 1976, 6754a ", a foamable polyurethane is mixed with sodium silicate, borax and perlite to give after foaming a fireproofed foam.

GB-A-1.447.591 discloses the preparation of mixtures of expanded mica, hydraulic binder means and sodium disilicate. After setting in the presence of water, non-inflammable construction elements are obtained.

According to a special embodiment of the invention, as swelling product, a product on the basis of silicate, in particular alkali disilicate, is added.

According to a practical embodiment, an amount of swelling product situated between 1 and 10 vol.% of the wood or woody particles is added.

According to a particular embodiment of the invention, as non-inflammable material, a mineral, in particular mica, and preferably an expanded mineral, is added.

According to a practical embodiment of the invention, an amount of non-inflammable material situated between 10 and 30 vol.% of the wood or woody particles is added.

According to an advantageous embodiment of the invention, the construction element has the shape of a board.

Other particularities and advantages of the invention will become clear from the following description of a construction element and a method for the manufacturing thereof, according to the invention. This description is given as an example only and does not limit the invention in any way.

A chipboard with an increased fire resistance according to the invention consists of wood particles or woody particles, such as particles from flax or hemp stalks which are bound together by means of a hardened adhesive, 10 to 30 volume percent of a mineral which has a bad heat conductivity and is noninflammable and does not undergo any changes up to a temperature higher than 600 degrees Celsius and 1 to 10 volume percent of a swelling product which starts swelling at 80 to 150 degrees Celsius.

Said components were mixed before the adhesive was hardened and pressed in a press in the shape of a board with the required dimensions or continuously pressed in a guideway into a strip with the required thickness and than sawed into boards with the required size. During said pressing, the adhesive hardens.

The adhesive may be a single-component adhesive, whereby a hardening agent is added as the components are mixed, or a binary adhesive. Suited adhesives are isocyanate or polyurethane adhesives. The hardening is due to a chemical reaction of an adhesive component with for example a hardening agent or to the mutual reaction of two adhesive components, and possibly due to the addition of heat, as a result of which a good binding of the wood particles or woody particles and a stiff whole is obtained.

Suited noninflammable mineral particles are particles of mineral perlite or aluminium silicates, more in particular of expanded aluminium silicates. Very well suited aluminium silicates to this end are micas, such as muscovite, biolite, lepidolite or zinnwaldite. These particles are noninflammable and do not undergo any changes up to a temperature of 600 degrees Celsius and in some cases even to a temperature of 1000 degrees or more.

Such expanded mica particles are now used as insulation material and are marketed by the company SIBLI from Liège under the name "Vermiculite".

A suited swelling product is a product on the basis of silicate, in particular alkali disilicate such as potassium disilicate and/or sodium disilicate. This product has either a solvent base or water base. Such products on the basis of silicate are available on the market and are used as paint for the protection of metal mouldings and are applied in one or several layers. These swelling products form an insulating foam under the influence of fire or great heat, at temperatures higher than 80 degrees Celsius and in particular between 80 and 150 or even more in particular between 100 and 150 degrees Celsius.

Such a fire-resistant swelling product meant to be used as paint is marketed by the German company HERBERTS GmbH from Cologne under the registered trade name "Unitherm".

The invention will be further specified by means of the following example:

A mixture was made of 100 parts by volume of woody particles of flax stalks, 10 parts by volume of isocyanate adhesive component, 1 part by volume hardening agent, 20 parts by volume expanded mica of the brand "Vermiculit" and 5 parts by volume of fire-resistant swelling product on the basis of alkali disilicate in liquid state of the type "Unitherm 38091" on a solvent basis.

This mixture was pressed together into a board of 35 mm thick and until the adhesive had sufficiently hardened.

The fire resistance lasted for 80 minutes as opposed to 23 minutes for the same board without the expanded mica and the fire-resistant swelling product (measured according to Belgian test standard NBN 713 020).

It appeared that the fire resistance was very good, although the fire resistance of the chipboard in itself was bad. The noninflammable mineral appears to slow down the destruction by fire or heat whereas the swelling product takes up the place of material which was possibly burnt away as it swells or foams and forms a fire-resistant and insulating screen in this place.

Relatively inexpensive construction elements such as chipboards, can now have extra applications because of their good fire resistance.

In particular, the construction elements does not necessarily have to be boards. They can also be blocks for example.

## Claims

1. Method for the manufacturing of a construction element, according to which wood particles or woody particles are mixed with a hardenable adhesive and the mixture is pressed in the required shape and is stiffened as a result of the hardening of the adhesive, characterized in that before the mixtures is pressed in the required shape and stiffened, an amount of a material is added to it which is non-inflammable and which does not undergo any structural changes up to a temperature of at least 600 degrees Celsius and which has a bad heat conductivity, and in that an amount of swelling product is added which starts swelling at a temperature higher than 80 degrees Celsius.

2. Method according to the above claim, characterized in that as swelling product a product on the basis of silicate is added.

3. Method according to the above claim, characterized in that as swelling product a product on the basis of alkali disilicate is added.

4. Method according to any of the above claims, characterized in that an amount of swelling product situated between 1 and 10 vol.% of the wood or woody particles is added.

5. Method according to the above claim, characterized in that an amount of swelling product of about 5 vol.% of the wood or woody particles is added.

6. Method according to any of the above claims, characterized in that as non-inflammable material a mineral is added.

7. Method according to the above claim, characterized in that as non-inflammable material an expanded mineral is added.

8. Method according to any of claims 6 and 7, characterized in that as non-inflammable mineral mica is added.

9. Method according to any of the above claims, characterized in that an amount of non-inflammable material situated between 10 and 30 vol.% of the wood or woody particles is added.

10. Method according to the above claim, characterized in that an amount of non-inflammable material of about 20 vol.% of the wood or woody particles is added.

11. Method according to any of the above claims, characterized in that the mixture is pressed in the shape of a board.

## Patentansprüche

1. Verfahren zur Herstellung eines Bauelementes, gemäß welchem Holzpartikel oder holzartige Partikel mit einem aushärtbaren Klebstoff vermischt werden und die Mischung in die erforderliche Form gepreßt wird und als Ergebnis des Aushärtens des Klebstoffs versteift wird, dadurch gekennzeichnet, daß, bevor die Mischung in die erforderliche Form gepreßt und versteift wird, eine Quantität eines Materials hinzugefügt wird, das unentflammbar ist und das bis zu einer Temperatur von zumindest 600 Grad Celsius keinen strukturellen Veränderungen unterliegt und das eine schlechte Wärmeleitfähigkeit hat, und dadurch, daß eine Quantität eines Blähprodukts zugefügt wird, das bei einer Temperatur von mehr als 80 Grad Celsius zu blähen beginnt.

2. Verfahren gemäß dem obengenannten Anspruch, dadurch gekennzeichnet, daß als Blähprodukt ein Produkt auf der Basis von Silikat zugefügt wird.

3. Verfahren gemäß dem obengenannten Anspruch, dadurch gekennzeichnet, daß als Blähprodukt ein Produkt auf der Basis von Alkalidisilikat zugefügt wird.

4. Verfahren gemäß einem der obengenannten Ansprüche, dadurch gekennzeichnet, daß eine Quantität an Blähprodukt zwischen 1 und 10 Volumenprozent der Holz- oder holzartigen Partikel zugefügt wird.

5. Verfahren gemäß dem obengenannten Anspruch, dadurch gekennzeichnet, daß eine Quantität an Blähprodukt von etwa 5 Volumenprozent der Holz- oder holzartigen Partikel zugefügt wird.

6. Verfahren gemäß einem der obengenannten Ansprüche, dadurch gekennzeichnet, daß als unentflammbares Material ein Mineral zugefügt wird.

7. Verfahren gemäß dem obengenannten Anspruch, dadurch gekennzeichnet, daß als unentflammbares Material ein expandiertes Mineral zugefügt wird.

8. Verfahren gemäß einem der Ansprüche 6 und 7, dadurch gekennzeichnet, daß als unentflammbares Material Glimmer zugesetzt wird.

9. Verfahren gemäß einem der obengenannten Ansprüche, dadurch gekennzeichnet, daß eine Quantität an unentflammbarem Material zwischen 10 und 30 Volumenprozent der Holz- oder holzartigen Partikel zugefügt wird.

10. Verfahren gemäß dem obengenannten Anspruch, dadurch gekennzeichnet, daß eine Quantität an unentflammbarem Material von etwa 20 Volumenprozent der Holz- oder holzartigen Partikel zugefügt wird.

11. Verfahren gemäß einem der obengenannten Ansprüche, dadurch gekennzeichnet, daß die Mischung in Form einer Platte gepreßt wird.

## Revendications

1. Procédé pour la fabrication d'un élément de construction, suivant lequel du bois ou des particules de bois sont mélangés avec un adhésif durcisseur et le mélange est pressé dans la forme requise et devient rigide à cause du durcissement de l'adhésif, caractérisé en ce que, avant que le mélange est pressé dans la forme requise et est devenu rigide, une quantité d'une matière ininflammable y est ajoutée et qui ne subit pas des changements structurels jusqu'à une temperature d'au moins 600 degrés Celsius, et qui est un mauvais conducteur de chaleur, et en ce qu'une quantité de produit gonflant est ajoutée qui commence à gonfler à une temperature au-dessus de 80 degrés Celsius.

2. Procédé suivant la revendication précédente, caractérisé en ce que, comme produit gonflant, un produit à base de silicate est ajouté.

3. Procédé suivant la revendication précédente, caractérisé en ce que, comme produit gonflant, un produit à base de disilicate alcalique est ajouté.

4. Procédé suivant l'une quelconque des revendications précitées, caractérisé en ce qu'une quantité de produit gonflant, situé entre 1 et 10 vol.% du bois ou des particules de bois, est ajoutée.

5. Procédé suivant la revendication précédente, caractérisé en ce qu'une quantité de produit gonflant, d'environ 5 vol.% du bois ou des particules de bois, est ajoutée.

6. Procédé suivant l'une quelconque des revendications précitées, caractérisé en ce que, comme matière ininflammable, un minéral est ajouté.

7. Procédé suivant la revendication précédente,caractérisé en ce que, comme matière ininflamamable, un minéral dilaté est ajouté.

8. Procédé suivantl'une des revendications 6 et 7, caractérisé en ce que, comme mineral ininflammable, du mica est ajouté.

9. Procédé suivant l'une quelconque des revendications précitées, caractérisé en ce qu'une quantité de matière ininflammable, située entre 10 et 30 vol.% du bois ou des particules de bois, est ajoutée.

10. Procédé suivant la revendication précédente, caractérisé en ce qu'une quantité de matière ininflammable d'environ 20 vol.% du bois ou des particules de bois, est ajoutée.

11. Procédé suivant l'une quelconque des revendications précitées, caractérisé en ce que le mélange est pressé dans la forme d'une planche.
